# EUROPÄISCHE PATENTSCHRIFT

(11) **EP 0 360 107 B1**
(45) Veröffentlichungstag und Bekanntmachung des Hinweises auf die Patenterteilung: **11.08.1993**
(21) Anmeldenummer: 89116708.2
(22) Anmeldetag: 09.09.1989
(51) Int. Cl.: G21F 7/005, G21C 19/32

(54) **Zentriereinrichtung zum Fluchten von sich gegenüberliegenden Oeffnungen zweier Bauteile**
Centering device for aligning opposite openings of two components
Dispositif de centrage pour aligner des ouvertures de deux composants opposés

(30) Priorität: 19.09.1988 DE 3831774
(43) Veröffentlichungstag der Anmeldung: 28.03.1990
(73) Patentinhaber: Noell GmbH, 97080 Würzburg (DE); Brennelementlager Gorleben GmbH, D-29475 Gorleben (DE)
(72) Erfinder: Hardt, Norbert, D-3000 Hannover 1 (DE); Köhne, Rainer, D-8702 Zell am Main (DE); Schulte, Burkhart, D-4950 Minden (DE)
(74) Vertreter: Kaiser, Henning

(56) Entgegenhaltungen:
- EP-A- 0 071 685
- EP-A- 0 171 774
- EP-A- 0 276 365
- FR-A- 1 355 690

## Beschreibung

Die Erfindung betrifft eine Zentriereinrichtung zum Fluchten von sich gegenüberliegenden Öffnungen zweier Bauteile, und zwar einer Schleuse und einem Behälter zur Aufnahme von durch die Schleuse gelangenden radioaktiven Reststoffen, wobei der Behälter wenigstens eine Öffnung aufweist, deren Querschnittsmittelpunkt zum Querschnittsmittelpunkt des Behälters versetzt angeordnet ist.

Der Erfindung liegt die Aufgabe zugrunde, eine Zentriereinrichtung zu schaffen, die Zentriervorgänge an der Schleuse vermeidet.

Die Aufgabe wird erfindungsgemäß durch ein Behältertrageteil gelöst,
- das an einem horizontal bewegbaren, zwangsgeführten Bauteil, aus einer Vertikalebene in eine Horizontalebene schwenkbar gelagert ist,
- dessen Längsachse sich in einer auf einen Festpunkt der Schleuse ausgerichteten Lageposition befindet,
- das ein Behälterführungsgebilde mit einer sich zur Bodenseite des Behältertrageteils verjüngenden Behälterdurchgangsöffnung aufweist,
- das ein Teil aufweist, das zusammen mit einem Teil des Behälters ein von der Kopfseite des Behältertrageteils her ineinandergreifendes Behälterführungsgebilde zur Positionierung der Behälteröffnung in Drehrichtung des Behälters darstellt,
- das zwischen seinem Boden und dem Behälterboden wenigstens zwei Zentrierstifte mit entsprechenden Gegenöffnungen aufweist,
- das mit mehreren Halteteilen ausgerüstet ist, die zur Sicherung des Behälters in seiner zentrierten Endlage dienen.

Durch die Erfindung ist eine Zentriereinrichtung vorhanden, mit der die Zentrierung von der Schleuse entfernt ausschließlich am Behälter erfolgt, was beim Andocken des Behälters an die Schleuse zu einer Verringerung der Gefahr einer Beschädigung der Schleuse führt. Darüberhinaus kommt die Erfindung mit einfachen mechanischen Mitteln aus und ist problemlos in ihrer Funktion. Es entfallen jegliche elektronische Bauteile, die im Einsatz in der Kerntechnik eine hohe Störanfälligkeit und eine geringe Lebensdauer aufweisen.

Vorteilhafte und zweckmäßige Weiterbildungen der Erfindung ergeben sich aus den Unteransprüchen.

Anhand der Zeichnung wird ein Ausführungsbeispiel der Erfindung nachstehend näher erläutert. Der besseren Übersicht halber wurde auf die Darstellung von nicht zum Verständnis der Erfindung erforderlichen Vorrichtungen verzichtet.

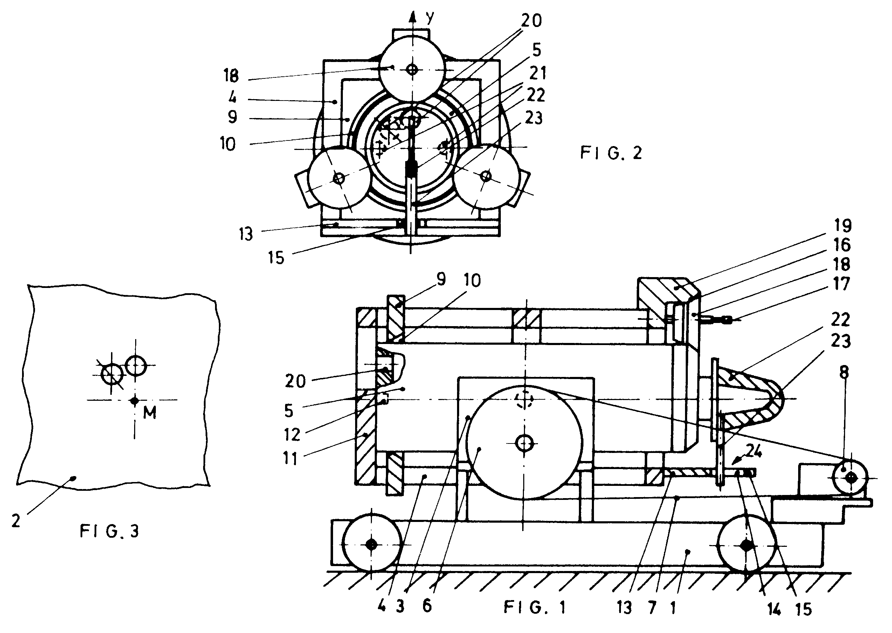

Es zeigt
- Fig. 1: die teilweise geschnittene Seitenansicht einer Zentriereinrichtung mit einem Behälter in seiner zentrierten Endlage,
- Fig. 2: ein Behältertrageteil mit dem Behälter nach Fig. 1 in Vorderansicht,
- Fig. 3: den Ausschnitt einer Schleuse in Vorderansicht.

Mit 1 ist ein seitengeführtes Schienenfahrzeug bezeichnet, das fernbedienbar in Richtung einer Schleuse 2 verfahrbar ist. In zwei Seitenhalterungen 3 des Fahrzeuges 1 ist über ein zeichnerisch nicht dargestelltes Malteserkreuzgetriebe ein Teil 4 schwenkbar gelagert, das aus einem Gestell besteht und zur Aufnahme eines Behälters 5 dient. Das Schwenkgetriebe wird über eine Zahnscheibe 6, einen Zahnriemen 7 und eine Zahnscheibe 8 von einem zeichnerisch nicht dargestellten Antrieb betätigt. Das Behältertrageteil 4 ist mit einem Ringteil 9 ausgerüstet, das einen Innenkonus 10 aufweist. In einem Bodenteil 11 des Behältertrageteils 4 befinden sich zwei Stifte 12, die einen konischen Ansatz aufweisen. Im Kopfbereich des Behältertrageteils 4 ist ein Teil 13 befestigt, das eine schlitzförmige Öffnung 14 aufweist, die sich über einen V-Einschnitt 15 erweitert. Ebenfalls im Kopfbereich des Behältertrageteils 4 befinden sich drei auf dem Umfang des Teils 4 gleichmäßig verteilte Halteteile 16, die aus einer fernbedienbaren Spindel 17, einem Spannteil 18, und einem an dem Behältertrageteil 4 verschwenkbar befestigten Gegenlagerteil 19 bestehen. Der Behälter 5 weist an seiner Unterseite zwei Durchgangsöffnungen 20 und zwei Sacköffnungen 21 auf. An seiner Oberseite ist der Behälter 5 mit einem Halteteil 22 für einen Krantransport ausgerüstet. Das Halteteil 22 ist an dem Behälter 5 lösbar befestigt, und zwar in einer ganz bestimmten unverwechselbaren Lage. Das Halteteil 22 ist mit einem Teil 23 versehen, das als eine im Querschnitt runde Stange ausgebildet ist und zusammen mit dem Teil 13 ein Behälterführungsgebilde 24 darstellt.

Der betriebliche Ablauf ist folgender:
Der Behälter 5 dient als Endlagerbehälter für geschnittene abgebrannte Brennstäbe. Er wird von einem fernbedienbaren Kran in das senkrecht stehende Trageteil 4 gestellt. Der Behälter 5 gelangt zunächst mit seinem Teil 23 in die Öffnung 14 des Teils 13, wodurch eine Vorzentrierung des Behälters 5 erfolgt, und zwar in eine ganz bestimmte, durch die Lage der Schleusenöffnungen vorbestimmte Drehwinkellage um seine Längsachse. Alsdann gelangt der Behälter 5 durch das Ringteil 9, das ihn mit seiner Längsachse auf die Längsachse des Trageteils 4, die auf den Punkt M der Schleuse 2 geeicht ist, vorzentriert. Kurz vor seinem Auftreffen auf das Bodenteil 11 greifen die beiden Stifte 12 in die Sacköffnungen 21, was zunächst eine Feinzentrierung und bei Auftreffen des Behälters 5 auf dem Bodenteil 11 eine Feinstzentrierung bewirkt, die den Behälter 5 exakt in eine Position bringt, die bei späterem Anlegen des Behälters 5 an die Schleuse 2 ein genaues Fluchten der Behälteröffnungen 20 mit den entsprechenden Schleusenöffnungen gewährleistet.
Der Behälter 5 wird in dieser Position mit den Halteteilen 16, die eingeschwenkt und gesichert werden, gegen eine Lageveränderung gesichert.
Alsdann wird das Behältertrageteil 4 zusammen mit dem Behälter 5 durch ein Malteserkreuzgetriebe aus der Vertikalposition in eine exakte Horizontalposition geschwenkt und mit dem Fahrzeug 1 an die Schleuse 2 gefahren, um dort angedockt zu werden. Eine der beiden Behälteröffnungen 20 dient der Befüllung des Behälters 5 mit kurz zuvor auf die Behälterinnenlänge geschnittenen Brennstäben. Die andere Behälteröffnung 20 ist für eine Leitung vorgesehen, die an eine Absauganlage angeschlossen ist, die den beim Schneiden der Brennstäbe anfallenden Staub in den Behälter 5 saugt.

## Patentansprüche

1. Zentriereinrichtung zum Fluchten von sich gegenüberliegenden Öffnungen zweier Bauteile, und zwar einer Schleuse (2) und einem Behälter (5) zur Aufnahme von durch die Schleuse (2) gelangenden radioaktiven Reststoffen, wobei der Behälter (5) wenigstens eine Öffnung (20) aufweist, deren Querschnittsmittelpunkt zum Querschnittsmittelpunkt des Behälters versetzt angeordnet ist, gekennzeichnet durch ein Behältertrageteil (4),
- das an einem horizontal bewegbaren, zwangsgeführten Bauteil (1) aus einer Vertikalebene in eine Horizontalebene schwenkbar gelagert ist,
- dessen Längsachse sich in einer auf einen Festpunkt (M) der Schleuse (2) ausgerichteten Lageposition befindet,
- das ein Behälterführungsgebilde (9) mit einer sich zur Bodenseite des Behältertrageteils (4) verjüngenden Behälterdurchgangsöffnung (10) aufweist,
- das ein Teil (13) aufweist, das zusammen mit einem Führungsteil (23) des Behälters (5) ein von der Kopfseite des Behältertrageteils (4) her ineinandergreifendes Behälterführungsgebilde (24) zur Positionierung der Behälteröffnung (20) in Drehrichtung des Behälters darstellt,
- das zwischen seinem Boden (11) und dem Behälterboden wenigstens zwei Zentrierstifte (12) mit entsprechenden Gegenöffnungen (21) aufweist,
- das mit mehreren Halteteilen (16) ausgerüstet ist, die zur Sicherung des Behälters in seiner zentrierten Endlage dienen.

2. Zentriereinrichtung nach Anspruch 1,
dadurch gekennzeichnet, daß das Behälterführungsgebilde (9) im unteren Bereich des Behältertrageteils (4) und das Behälterführungsgebilde (24) im oberen Bereich des Behältertrageteils (4) vorgesehen ist.

3. Zentriereinrichtung nach Anspruch 1 oder 2,
dadurch gekennzeichnet, daß das Behälterführungsgebilde (9) aus einem Ringteil mit einem Innenkonus (10) besteht.

4. Zentriereinrichtung nach Anspruch 1 oder 2,
dadurch gekennzeichnet, daß sich das Behälterführungsgebilde (24) mit seiner Mittellinie auf einer geraden, den Querschnittsmittelpunkt des Behälters (5) und den Querschnittsmittelpunkt der Behälteröffnung (20) schneidenden Linie (y) befindet.

5. Zentriereinrichtung nach Anspruch 4,
dadurch gekennzeichnet, daß die Linie (y) in zentrierter Endlage des Behälters (5) eine Vertikale bildet.

6. Zentriereinrichtung nach Anspruch 1,
dadurch gekennzeichnet, daß das Teil (13) eine schlitzförmige Öffnung (14) zur Aufnahme des Behälterführungsteils (23) aufweist, die sich über einen V-Einschnitt erweitert.

7. Zentriereinrichtung nach Anspruch 1,
dadurch gekennzeichnet, daß das Behälterführungsteil (23) an einem mit dem Behälter (5) lösbar verbundenen Halteteil (22) befestigt ist.

8. Zentriereinrichtung nach Anspruch 1,
dadurch gekennzeichnet, daß am den des Behältertrageteils (4) Zentrierstifte (12) vorgesehen sind.

## Claims

1. Centering device for aligning opposite openings of two components, namely a charge box (2) and a container (5) for receiving radioactive residual substances passing through the charge box (2), the container (5) having at least one opening (20), the centre of cross-section thereof being disposed so as to be offset relative to the centre of cross-section of the container, characterised by a container supporting member (4),
- which is mounted on a horizontally displaceable, positively guided component (1) so as to be pivotable from a vertical plane into a horizontal plane,
- the longitudinal axis of which lies in a position aligned with a reference (M) of the charge box (2),
- which has a container guide structure/system (9) provided with a container through-aperture (10), which tapers towards the bottom end of the container supporting member (4),
- which has a portion (13), which forms, together with a guide member (23) of the container (5), a container guide structure (24), which engages from the top end of the container supporting member (4), for locating the container opening (20) in the rotary direction of the container,
- which has, between its base (11) and the container base, at least two centering pins (12) provided with corresponding counter-openings (21),
- which is provided with a plurality of retaining members (16), which serve to secure the container in its centred end position.

2. Centering device according to claim 1, characterised in that the container guide structure (9) is provided in the lower region of the container supporting member (4), and the container guide structure (24) is provided in the upper region of the container supporting member (4).

3. Centering device according to claim 1 or 2, characterised in that the container guide structure (9) comprises an annular portion provided with an inside taper (10).

4. Centering device according to claim 1 or 2, characterised in that the container guide structure (24) is situated with its centre axis on a straight line (y), which intersects the centre of cross-section of the container (5) and the centre of cross-section of the container opening (20).

5. Centering device according to claim 4, characterised in that the line (y) in the centred end position of the container (5) forms a vertical.

6. Centering device according to claim 1, characterised in that the portion (13) has a slot-like aperture (14) for receiving the container guide member (23), which aperture extends over a V-shaped incision.

7. Centering device according to claim 1, characterised in that the container guide member (23) is mounted on a retaining member (22), which is detachably connected to the container (5).

8. Centering device according to claim 1, characterised in that centering pins (12) are provided on the base of the container supporting member (4).

## Revendications

1. Dispositif de centrage pour aligner des ouvertures opposées de deux éléments de construction, à savoir un sas (2) et un réservoir (5) destiné à recevoir des résidus radioactifs traversant le sas (2), étant précisé que le réservoir (5) comporte au moins une ouverture (20) dont le centre en section transversale est décalé par rapport à celui du réservoir, caractérisé par un élément de support de réservoir (4)
- qui est monté sur un élément de construction (1) mobile horizontalement à guidage forcé, pour pouvoir pivoter d'un plan vertical vers un plan horizontal,
- dont l'axe longitudinal se trouve dans une position orientée vers un point fixe (M) du sas (2),
- qui présente une structure de guidage de réservoir (9) pourvue d'une ouverture de passage de réservoir (10) s'effilant vers le côté du fond de l'élément de support (4),
- qui comporte un élément (13) constituant, avec un élément de guidage (23) du réservoir (5), une structure de guidage de réservoir (24) s'emboîtant par le côté de la tête de l'élément de support (4) et destinée au positionnement de l'ouverture (20) du réservoir dans le sens de rotation de celui-ci,
- qui comporte, entre son fond (11) et le fond du réservoir, au moins deux pointes de centrage (12) pourvues d'ouvertures opposées correspondantes (21), et
- qui est équipé de plusieurs éléments de retenue (16) qui servent à immobiliser le réservoir dans sa position finale centrée.

2. Dispositif de centrage selon la revendication 1, caractérisé en ce que la structure de guidage de réservoir (9) est prévue dans la zone inférieure de l'élément de support de réservoir (4) tandis que la structure de guidage de réservoir (24) est prévue dans la zone supérieure dudit élément de support (4).

3. Dispositif de centrage selon la revendication 1 ou 2, caractérisé en ce que la structure de guidage de réservoir (9) se compose d'un élément annulaire comportant un cône intérieur (10).

4. Dispositif de centrage selon la revendication 1 ou 2, caractérisé en ce que la ligne médiane de la structure de guidage de réservoir (24) se trouve sur une ligne droite (y) qui coupe le centre en section transversale du réservoir (5) et celui de l'ouverture (20) du réservoir.

5. Dispositif de centrage selon la revendication 4, caractérisé en ce que la ligne (y) définit une verticale quand le réservoir (5) est en position finale centrée.

6. Dispositif de centrage selon la revendication 1, caractérisé en ce que l'élément (13) comporte une ouverture en forme de fente (14) destinée à recevoir l'élément de guidage de réservoir (23) et s'élargissant par l'intermédiaire d'une encoche en V.

7. Dispositif de centrage selon la revendication 1, caractérisé en ce que l'élément de guidage de réservoir (23) est fixé à un élément de retenue (22) relié de façon amovible au réservoir (5).

8. Dispositif de centrage selon la revendication 1, caractérisé en ce qu'il est prévu, au fond de l'élément de support de réservoir (4), des pointes de centrage (12).
